# EUROPEAN PATENT SPECIFICATION

(11) **EP 2 991 899 B1**
(45) Date of publication and mention of the grant of the patent: **06.06.2018**
(21) Application number: 14791218.2
(22) Date of filing: 29.04.2014
(51) Int. Cl.: B64D 11/06

(54) **COMPACT CABIN ATTENDANT SEAT STOWAGE**
KOMPAKTE FLUGBEGLEITERSITZVERSTAUUNG
STOCKAGE COMPACT DE SIÈGE DE PERSONNEL DE CABINE

(30) Priority: 29.04.2013 US 201361817259 P; 24.07.2013 US 201361858073 P; 07.04.2014 US 201461976461 P
(43) Date of publication of application: 09.03.2016
(73) Proprietor: C&D Zodiac, Inc., Huntington Beach, CA 92647 (US)
(72) Inventor: NABIH, Najd, Huntington Beach, CA 92647 (US); REAMS, Edward, Huntington Beach, CA 92647 (US); SAVIAN, Scott, Huntington Beach, CA 92647 (US); ZARROUATI, Olivier, F-78373 Plaisir Cedex (FR)
(74) Representative: Stevenson-Hill, Jack Patrick
(86) International application number: PCT/US2014/035932
(87) International publication number: WO 2014/179348

(56) References cited:
- EP-A1- 2 583 897
- EP-A1- 2 583 897
- US-A- 4 679 749
- US-A- 4 993 666
- US-A- 5 984 397
- US-A- 6 079 669
- US-A1- 2009 102 222
- US-A1- 2012 199 695

## Description

### CROSS REFERENCE TO RELATED APPLICATIONS

This application claims the benefit of U.S. Provisional Application Nos. 61/976,461 filed April 7, 2014, 61/858,073 filed July 24, 2013, and 61/817,259 filed April 29, 2013, the entireties of which are incorporated herein by reference.

### FIELD OF THE INVENTION

The present invention relates to a cabin attendant seat for commercial aircraft, and more particularly to a stowable cabin attendant seat.

### BACKGROUND OF THE INVENTION

Commercial aircraft, such as the Airbus A320 or Boeing 737 are typically constructed from modular components, the size, weight and construction of which are dictated by many considerations, including fuselage dimensions, aesthetic and safety considerations. Many of these requirements are imposed by law or regulation. Aircraft components, such as overhead stowage compartments, seats, lavatories, galleys, lighting systems, etc. are all required to function within strictly confined spaces.

Manufacturers of aircraft are constantly refining interior aircraft designs to achieve more comfort and utility for passengers and crew within carrier-imposed restraints on cost, weight, maintenance down-time, and safety. Commercial passenger aircraft generally include cabin attendant seats that are used by cabin attendants during taxi, takeoff and landing.

EP 2,583,897 relates to a rotatable cabin attendant seat. According to the abstract of this document there is disclosed a cabin attendant seat which comprises a backrest element and a seat element which is secured to the backrest element. The backrest element is rotatable about a rotation axis in order to move the cabin attendant seat between a rest position and an operating position. A fastening device for fastening the cabin attendant seat to a side wall of an aircraft monument is constructed and sized in such a manner that it is capable of directing away a predetermined maximum force which can be introduced into the cabin attendant seat during operation of the cabin attendant seat via the side wall of the aircraft monument.

### BRIEF DESCRIPTION OF THE DRAWINGS

FIG. 1 is a plan view of an aft complex that includes a stowable cabin attendant seat positioned in the aft portion of an aircraft in accordance with a preferred embodiment of the present invention;
FIG. 2 is a side elevational cross-sectional view of the aft complex of FIG. 1 and showing the chair assembly in the deployed position;
FIG. 3A is a perspective view of the chair assembly in the stowed position;
FIG. 3B is another perspective view of the chair assembly in the stowed position;
FIG. 4A is a perspective view of the cabin attendant seat in the first intermediate position;
FIG. 4B is another perspective view of the chair assembly in the first intermediate position;
FIG. 5A is a perspective view of the chair assembly in the second intermediate position;
FIG. 5B is another perspective view of the chair assembly in the second intermediate position;
FIG. 6A is a perspective view of the chair assembly in the deployed position;
FIG. 6B is another perspective view of the chair assembly in the deployed position;
FIG. 7 is an elevational view showing a comparison of the chair assembly in the stowed position in solid lines and in the first intermediate position in hidden lines;
FIG. 8 is a perspective view of the handle;
FIG. 9 is a perspective view of the lock assembly and hinge pin for rotating the chair assembly;
FIG. 10 is a perspective view of the chair assembly and a portion of the stowage compartment;
FIG. 11 is an exploded view of the chair assembly and a portion of the stowage compartment;
FIG. 12 is a cross-sectional view of the locking pin; and
FIG. 13 is a perspective view of the pivotal stowage lock.

Like numerals refer to like parts throughout the several views of the drawings.

### SUMMARY OF THE PREFERRED EMBODIMENTS

In accordance with a first aspect of the present invention there is provided an aircraft monument that includes an enclosure with an enclosure interior, a compartment with a compartment interior positioned in the enclosure interior, and a stowable seat assembly disposed in the compartment. The compartment includes at least a first vertically oriented wall. The seat assembly includes a chair assembly with a back portion and a seat portion pivotably connected to the back portion along a seat pivot axis such that the seat is pivotable between closed and open positions. The chair assembly is movable between a stowed position where the seat pivot axis extends generally parallel to the first wall and the chair assembly is positioned in the compartment interior, and a deployed position where the seat pivot axis extends generally perpendicular to the first wall and the chair assembly is positioned outside of the compartment interior.

In a preferred embodiment, the compartment is positioned between a first facility and a second facility, at least one of the facilities includes a sink, and at least a portion of the chair assembly is positioned below at least a portion of the sink when the chair assembly is in the stowed position. Preferably, the compartment includes a top wall that is positioned at a first height, and in the stowed position the entire chair assembly is positioned below the first height, and in the deployed position at least a portion of the chair assembly is positioned above the first height. Preferably, the sink includes a counter, and the sink and counter are mounted on the top wall.

In a preferred embodiment, the seat pivot axis defines a center point, and in the stowed position the center point is located at a first position and in the deployed position the center point is located at a second position that is located forward of the first position. Preferably, the center point first position defines a second height and the center point second position defines a third height, and wherein the second height is lower than the third height. In a preferred embodiment, the stowable seat assembly includes a track assembly that is secured to the first wall and the chair assembly is movable along the track assembly between the stowed position and the deployed position. Preferably, the track assembly includes at least one arcuate shaped wear plate. In a preferred embodiment, the chair assembly is has a generally vertical configuration in both the stowed position and the deployed position.

In accordance with another aspect of the present invention there is provided a stowable seat assembly that includes a compartment that includes at least a first wall, a chair assembly that includes a back portion and a seat portion and a deployment assembly secured to the first wall that is operable to move the chair assembly between a stowed position and a deployed position where the chair assembly is generally vertically oriented in both positions. The back portion has a top and a bottom and the seat portion is pivotably connected to the back portion along a seat pivot axis such that the seat portion is pivotable between a closed position and an open position. In a preferred embodiment, the first wall is generally vertically oriented. In the stowed position the seat pivot axis extends generally parallel to the first wall, and in the deployed position the seat pivot axis extends generally perpendicular to the first wall. In a preferred embodiment, the chair assembly moves upwardly along an arcuate path as it moves from the stowed position to the deployed position. Preferably, the compartment includes a top wall that is positioned at a first height. In the stowed position the entire chair assembly is positioned below the first height, and in the deployed position at least a portion of the chair assembly is positioned above the first height.

In a preferred embodiment, the seat pivot axis defines a center point. In the stowed position the center point is located at a first position and in the deployed position the center point is located at a second position, and the second position is located forward of the first position. Preferably, the deployment assembly is pivotably connected to the first wall such that the chair assembly is movable between the stowed position and a first intermediate position, where the chair assembly is generally vertically oriented. Preferably, the deployment assembly is hingedly connected to the back portion of the chair assembly such that the chair assembly is movable between the first intermediate position and a second intermediate position, where the chair assembly is generally vertically oriented. In a preferred embodiment, the chair assembly further includes a head rest that is pivotably connected to the top of the back portion and is movable between a closed position and an open position.

In a preferred embodiment, the chair assembly includes a trigger that is operably connected to the deployment assembly. The deployment assembly includes a lock assembly having an engaged position and a disengaged position, and wherein operation of the trigger moves the lock assembly to the disengaged position such that the chair assembly can be rotated from the first intermediate position to the second intermediate position.

In accordance with yet another aspect of the present invention there is provided a method of deploying a chair assembly that includes providing a stowable seat assembly that includes the chair assembly and a deployment assembly that is connected to a first wall. The chair assembly includes a back portion and a seat portion that is pivotably connected to the back portion along a seat pivot axis. The method also includes moving the chair assembly from a stowed position where the seat pivot axis extends generally parallel to the first wall to a first intermediate position where the seat pivot axis extends generally parallel to the first wall, rotating the chair assembly about a back portion pivot axis from the first intermediate position to a second intermediate position where the seat pivot axis extends generally perpendicular to the first wall, and pivoting the seat portion to an open position, thereby placing the chair assembly in a deployed position. In a preferred embodiment, the chair assembly moves along an arcuate path with it is moved from the stowed position to the first intermediate position.

In a preferred embodiment, the compartment includes a top wall that is positioned at a first height. In the stowed position the entire chair assembly is positioned below the first height and in the deployed position at least a portion of the chair assembly is positioned above the first height. Preferably, the top wall includes a sink thereon. Preferably, the method includes the step of grasping a handle that is located on the chair assembly prior to moving the chair assembly from the stowed position. In a preferred embodiment, the handle includes a trigger, and the method includes pulling a trigger to release a locking mechanism prior to rotating the chair assembly about the back portion pivot axis. Preferably, the chair assembly includes a headrest pivotably connected to the back portion and pivoting the headrest from a closed position to an open position is part of moving the chair assembly to the deployed position.

The present invention includes a stowable and collapsible cabin attendant seat for a vehicle such as an aircraft. In the figures, the cabin attendant seat is associated with a monument or complex positioned in the aft section of an aircraft. However, this is not a limitation on the present invention and the cabin attendant seat can be positioned elsewhere within an aircraft or other vehicle. The use of the seat on an aircraft or other vehicle is also not limiting. The seat can be used in any situation where a collapsible and stowable seat is desired.

In the exemplary embodiment described herein and shown in the figures, the cabin attendant seat is integrated into the aft complex between dual lavatories and a galley. In this position, the seat or chair provides the seated cabin attendant a central direct view of the cabin. In exemplary embodiments, the seat can be used in aircraft layouts in which the aft monuments do not permit installation of cabin attendant seats or if the aft monuments prevent the cabin attendant seats that are installed thereon from having direct view of the cabin.

In a preferred embodiment, the present invention comprises a collapsible cabin attendant seat that is installed on an angled or curved track, as shown in the figures. In the stowed position, the cabin attendant seat is positioned approximately parallel to the aisle and preferably sits below the countertop of the adjacent lavatory of the aft complex. In a preferred embodiment, the headrest is collapsed to be adjacent the seatback, which allows the seat to fit in the compact area below the lavatory countertop. The seat is stowed using retainers, such as a pivotable stowage lock.

Generally, to move the seat to the deployed position, the cabin attendant or other person releases the attendant seat from its stowage retainers and pulls the seat upwardly and outwardly. At the peak of the track the seat then folds out at approximately 90° counter-clockwise, becoming approximately perpendicular to the aisle. In other embodiments, the seat can deploy in a clockwise direction. The headrest is then pivoted or slid to the use position. In another embodiment, the collapsible headrest can be omitted. The deployed seat is preferably latched into position, and rests against the wall of the aft complex to which the assembly is attached.

In a preferred embodiment, the aft wall of the compartment in which the chair assembly is stowed includes a sink cut out therein. This allows the chair assembly to stow at least partially underneath the sink and then deploy forwardly of and at least partially above the sink and associated counter.

In a preferred embodiment, the plumbing system is unique in that the dual lavatories share some plumbing elements. These shared plumbing elements are preferably installed on the outboard lavatory of the aft complex. (however, the shared plumbing elements can also be installed in the inboard lavatory). Sharing at least some plumbing elements between the dual lavatories opens up space below the sink countertop of the inboard lavatory, which provides a place for the collapsible cabin attendant seat to be stowed.

### DETAILED DESCRIPTION OF THE PREFERRED EMBODIMENTS

The following description and drawings are illustrative and are not to be construed as limiting. Numerous specific details are described to provide a thorough understanding of the disclosure. However, in certain instances, well-known or conventional details are not described in order to avoid obscuring the description. References to one or an other embodiment in the present disclosure can be, but not necessarily are, references to the same embodiment; and, such references mean at least one of the embodiments.

Reference in this specification to "one embodiment" or "an embodiment" means that a particular feature, structure, or characteristic described in connection with the embodiment is included in at least one embodiment of the disclosure. Appearances of the phrase "in one embodiment" in various places in the specification do not necessarily refer to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks: The use of highlighting has no influence on the scope and meaning of a term; the scope and meaning of a term is the same, in the same context, whether or not it is highlighted. It will be appreciated that the same thing can be said in more than one way.

Consequently, alternative language and synonyms may be used for any one or more of the terms discussed herein. Nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

It will be appreciated that terms such as "front," "back," "top," "bottom," "side," "short," "long," "up," "down," and "below" used herein are merely for ease of description and refer to the orientation of the components as shown in the figures. It should be understood that any orientation of the components described herein is within the scope of the present invention. Furthermore, it will be appreciated that terms such as "aft," "forward," "inboard," "outboard," "left," and "right" are used as is typical in the aircraft industry and refer to the orientation of the aft complex and the components thereof described herein as if they were positioned in an aircraft.

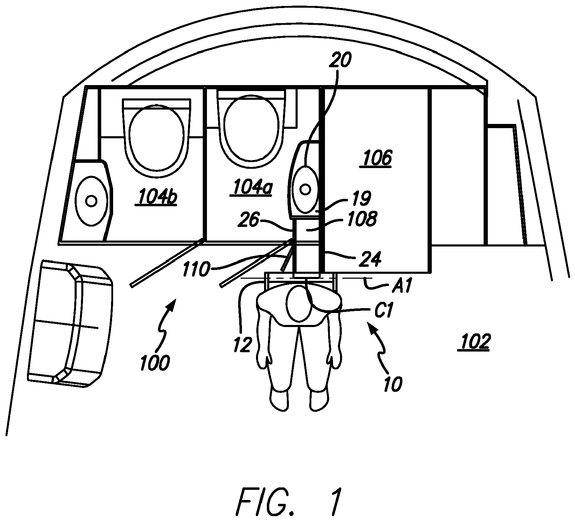

Referring now to the drawings, which are for purposes of illustrating the present invention and not for purposes of limiting the same, the figures show a stowable cabin attendant seat assembly 10 and the method and process for stowing the chair assembly 12 thereof. As shown in FIGS. 1-13, generally, the stowable seat assembly 10 includes a chair assembly 12 with a back portion 14 and a seat portion 16, a deployment assembly 18 that is secured to the rear surface of the back portion 14, and a track assembly 22 that, as described below, is configured to be secured to a wall.

As shown in FIGS. 1-2, in a preferred embodiment, the stowable seat assembly 10 is associated with an enclosure (referred to herein as an aft complex 100) that is positioned in an aircraft interior 102. The aft complex 100 includes an interior that is divided up into inboard and outboard lavatories 104a and 104b and a galley 106 and a compartment 108 in which the stowable seat assembly 10 is stowed. The aft complex 100 can include more or less lavatories or more or less galleys or other compartments, such as stowage closets, etc. Therefore, the lavatories and galley, etc. are referred to herein generally as facilities.

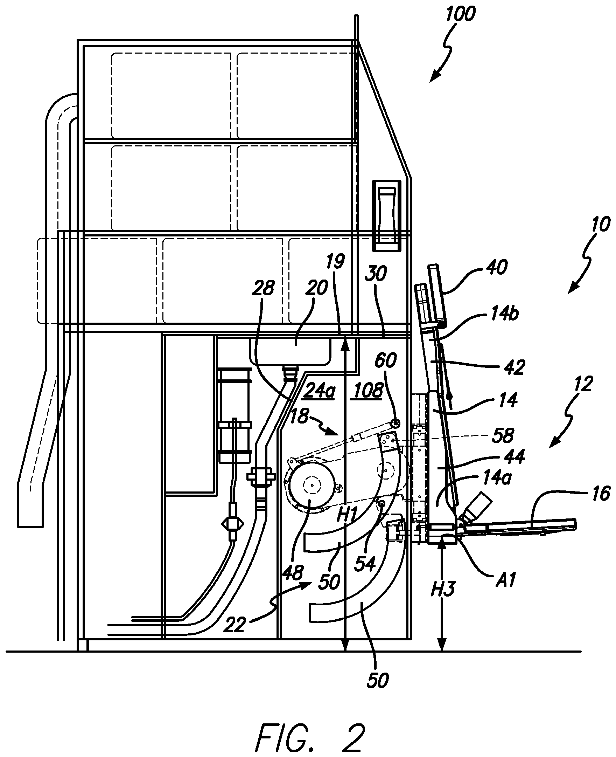

In a preferred embodiment, the compartment 108 is defined by a first wall 24 on which the track assembly 22 is mounted, an opposing wall 26, an aft wall 28, and a top wall 30. As shown in FIGS. 1-2, in a preferred embodiment, at least a portion of the stowable seat assembly 10 is positioned below a counter 19 and sink 20 that are a part of the inboard lavatory 104a. As shown in FIG. 2, top wall 30 includes the counter 19 and the sink 20 mounted thereon.

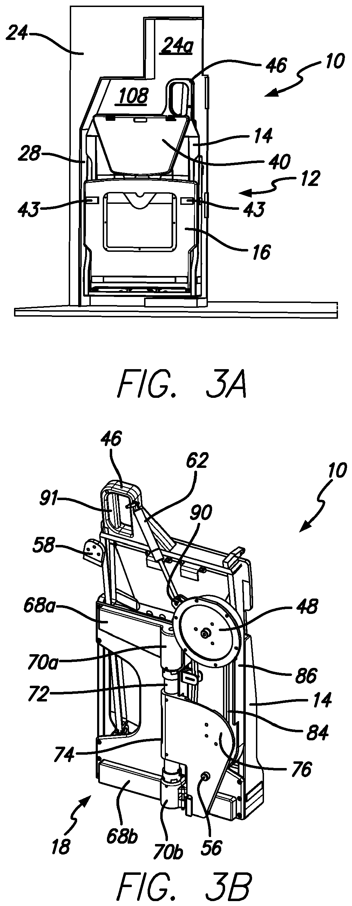

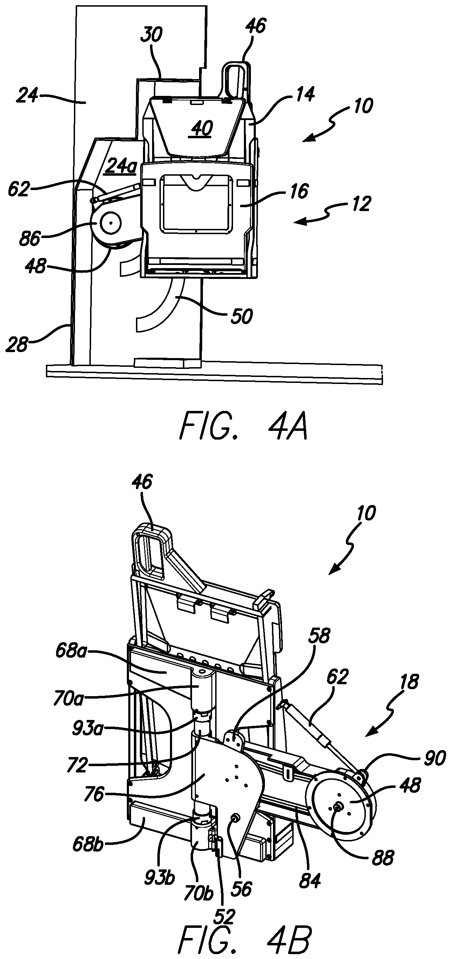

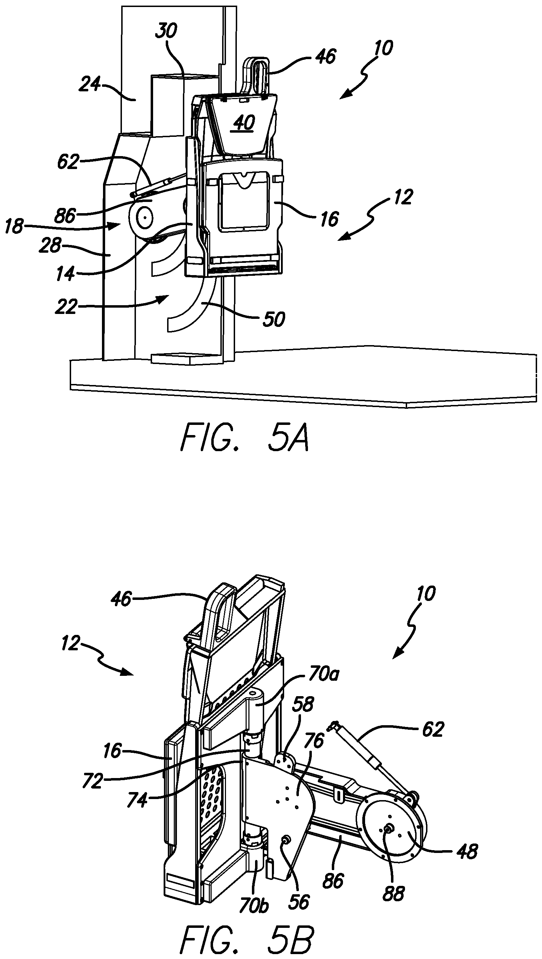

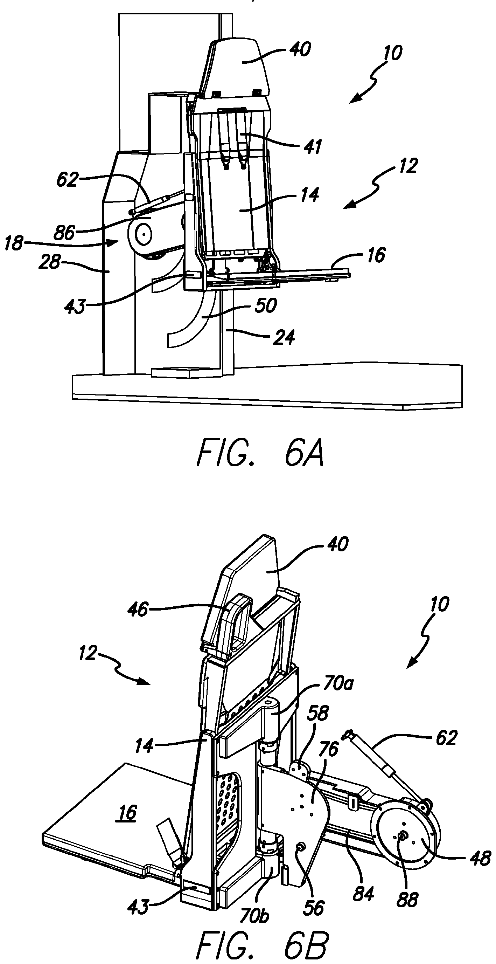

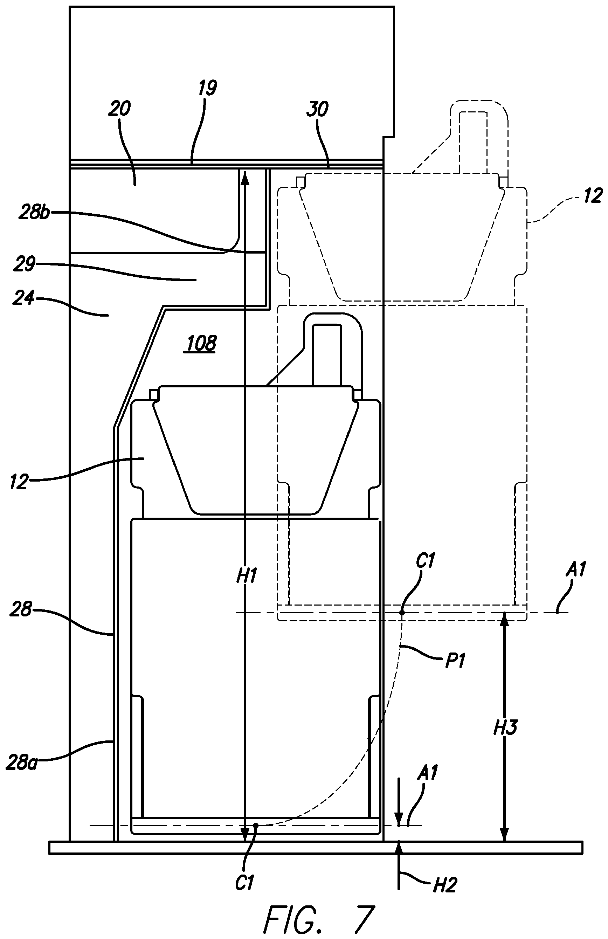

As shown in FIGS. 3A-6B, the chair assembly 12 is generally movable between a stowed position (FIGS. 3A-3B) and a deployed position (FIGS. 6A-6B). It will be appreciated that, in use, the chair assembly 12 is usually in the deployed position during taxi, takeoff and landing (TTL) and is usually in the stowed position at all other times. FIGS. 4A-5B show the chair assembly 12 in first and second intermediate positions between the stowed position and the deployed position. Accordingly, for descriptive purposes herein, the position shown in FIGS. 4A-4B is referred to as the first intermediate position and the position shown in FIGS. 5A-5B is referred to as the second intermediate position. Also see FIG. 7, which shows the chair assembly 12 in the stowed position and the first intermediate position. In the stowed position, the entire chair assembly 12 is positioned below the height of the top wall 30, counter 19 and sink 20 and in the deployed position, at least a portion of the chair assembly 12 is positioned above the height of the top wall 30, counter 19 and sink 20, as is best shown in FIGS. 2-3.

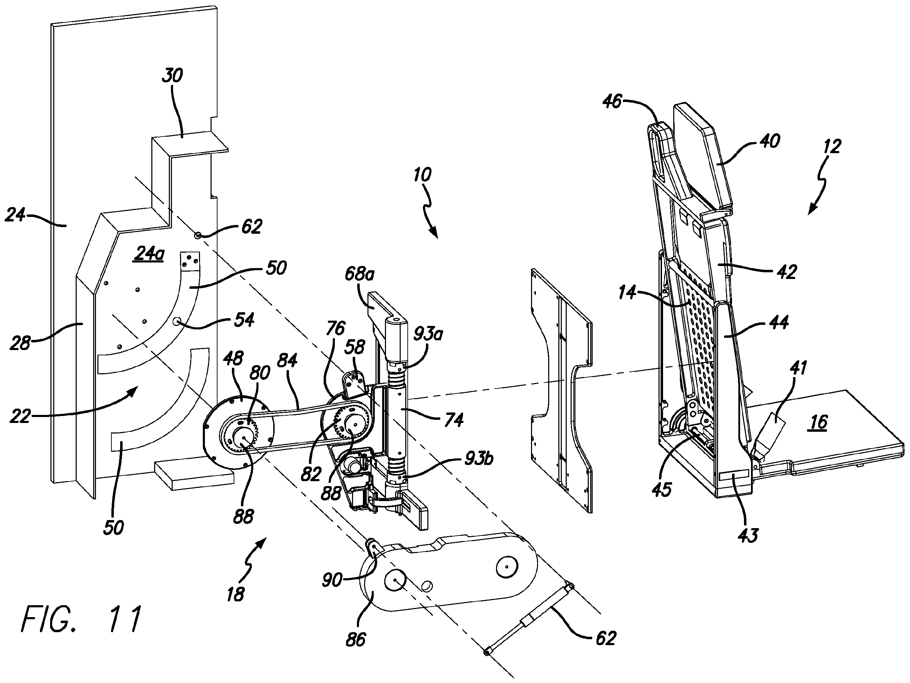

As shown in FIGS. 1-7, in a preferred embodiment, the back portion 14 of the chair assembly 12 has a bottom 14a to which the seat portion 16 is pivotally attached (along seat pivot axis A1) and a top 14b to which a headrest 40 is pivotably attached. As shown in FIG. 11, the chair assembly includes one or more pivot axles 45 that defines the pivot axis A1. As shown in FIGS. 3A-5B, in the stowed, first intermediate and second intermediate positions, the seat portion 16 and headrest 40 are each in a stowed or closed position so that the chair assembly 12 is compact. In a preferred embodiment, the back portion 14 includes an upper section 42 and a lower section 44, and the upper section 42 can translate downwardly with respect to the lower section, thereby further compacting the size of the chair assembly 12.

With reference to FIGS. 6A-6B, in the deployed position, the seat portion 16 and headrest 40 are pivoted to a deployed or open position for use by a cabin attendant. In a preferred embodiment, the headrest 40 automatically locks in the deployed position. However, this is not a limitation on the present invention. Any type of hinge or pivot mechanism between the seat portion 16 and the back portion 14 and the headrest 40 and the back portion 14 is within the scope of the present invention. In a preferred embodiment, the seat portion 16 is biased by a spring or the like to the stowed position and only remains in the deployed or open position when a cabin attendant is sitting on the seat portion 16.

In a preferred embodiment, the chair assembly 12 includes a handle 46. As shown in FIGS. 3A-6B, in a preferred embodiment, the handle 46 is disposed on the back portion 14 and is used to pull the chair assembly 12 from the deployed position to the first intermediate position, as is described further below.

In a preferred embodiment, the stowable seat assembly 10 includes a restraint system 41 for securing a cabin attendant during TTL and also includes bumpers 43 on various components. The bumpers 43 protect the stowable seat assembly 10 when the chair assembly 12 is moved in and out of the compartment 108.

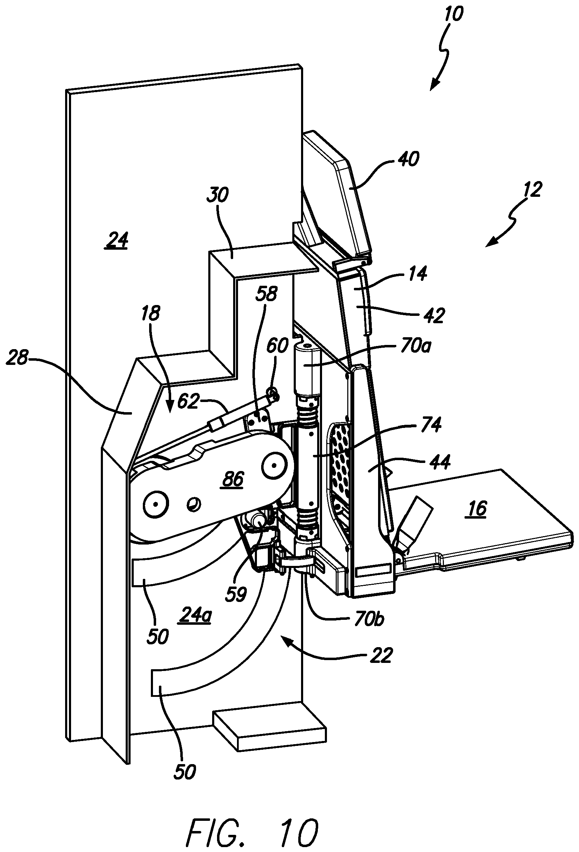

As is shown in FIGS. 10-11, some components of the stowable seat assembly 10 are secured to the first wall 24. This provides a pivot point for the deployment assembly 18 and a mounting location for the track assembly 22. For the deployment assembly 18, a circular plate 48 is mounted on the inner surface 24a of the first wall 24. As is described below, this provides a mounting and pivoting point for the deployment assembly 18 and the entire stowable seat assembly 10.

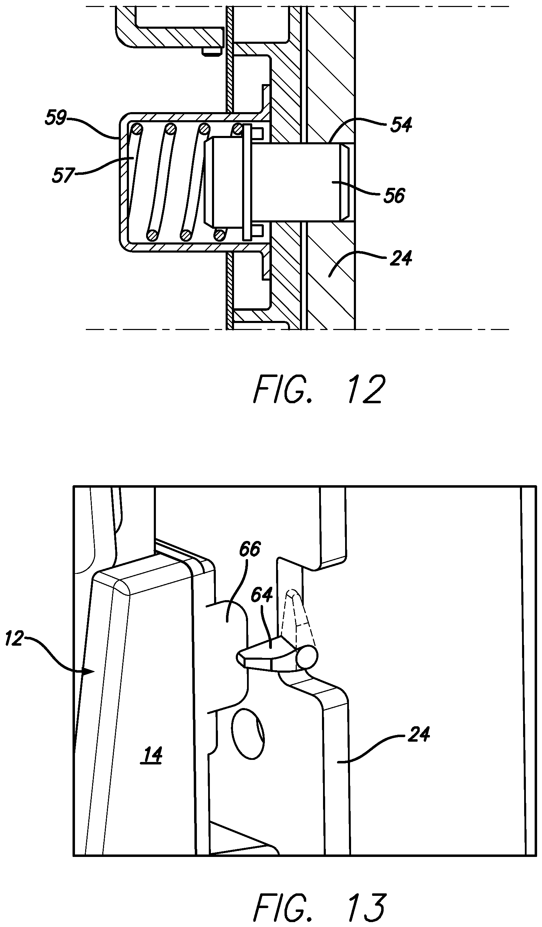

In a preferred embodiment, the track assembly 22 includes at least one and preferably two wear plates 50 on which pads 52 (e.g., Teflon pads) ride when the chair assembly 12 is moved from the deployed position to the first intermediate position and vice versa. One of the wear plates 50 includes a lock pin opening 54 defined therein. As shown in FIG. 12, this opening 54 receives a spring biased lock pin 56, when the chair assembly 12 reaches the first intermediate position (see spring 57, which is housed in casing 59, in FIG. 12). This maintains the chair assembly 12 in the desired position. As shown in FIG. 2, in a preferred embodiment, the track assembly 22 also includes an upper stop member 58 that is connected to first wall 24 and prevents the chair assembly 12 from moving beyond the desired stopping point. As shown in FIG. 2, a gas spring mounting flange 60 is secured to the first wall 24. This is used for mounting a gas spring 62, which is part of the deployment assembly 18 and provides assistance in moving the chair assembly 12 between the stowed and deployed positions and is described further below.

As shown in FIG. 13, in a preferred embodiment, the chair assembly 12 includes a pivotable stowage latch 64, which is mounted on the first wall 24 and interacts with a plate 66 on the chair assembly 12 to prevent the chair assembly 12 from moving from the stowed position. In another embodiment, the pivotable stowage latch can be mounted on the chair assembly 12 and can mate with a slot defined in the first wall 24.

With reference to FIGS. 3A-6B, the deployment assembly 18 generally includes upper and lower connection members 68a and 68b that connect to the rear surface of the back portion 14 and that each include upper and lower knuckles or receiver members 70a and 70b that receive a vertically oriented post or hinge pin 72. The hinge pin 72 extends through a receiver member 74 that is part of an elbow plate 76. In a preferred embodiment, the deployment assembly 18 also includes circular plate 48, gas spring 62, a first gear 80, a second gear 82, a belt 84 and a cover 86. In use, the first gear 80 pivots about a pivot shaft 88 that extends through an opening in the center of the circular plate 48, and the second gear 82 pivots about a pivot shaft 88 that is mounted to the elbow plate 76. It will be appreciated by those of skill in the art that the first gear 80 and pivot shaft 88 provide a first pivot point on the first wall 24 and the second gear 82 and pivot shaft 88 provide a second pivot point on the elbow plate 76. This dual pivoting action allows the chair assembly 12 to move upwardly and outwardly (forwardly) while maintaining a generally vertical orientation.

In a preferred embodiment, gas spring 62 extends between two mounting flanges 90 that protrude from the cover 86 and the gas spring mounting flange 60, which, as described above, is secured to the first wall 24. In a preferred embodiment, the gas spring 62 provides assistance when moving the chair assembly 12 between the stowed position and the first intermediate position, and helps damp the movement of the chair assembly 12 when moving from the first intermediate position to the stowed position.

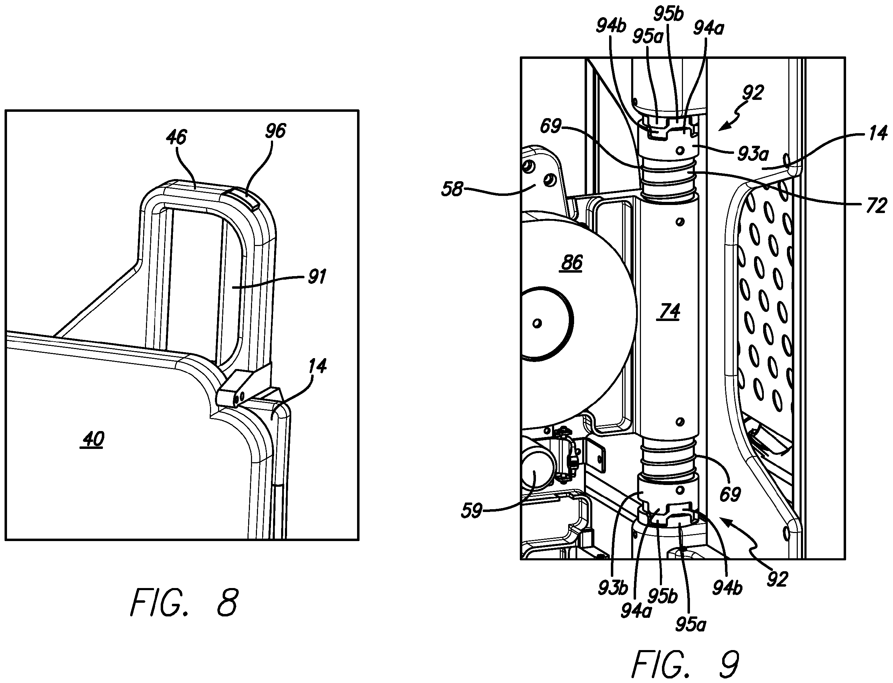

As shown in FIGS. 8-9, in a preferred embodiment, the handle 46 includes a trigger 91 that operates a lock assembly 92 and allows the chair assembly 12 to pivot or rotate about the hinge pin 72. The trigger 91 is in communication with upper and lower rings 93a and 93b that include teeth 94a and recesses 94b thereon that are mated with complementary teeth 95a and recesses 95b that are defined in the upper and lower receiver members 70a and 70b. In another embodiment, the teeth 95a and recesses 95b can be part of a ring that is separate from the upper and lower receiver members 70a and 70b. Preferably, the upper and lower rings 93a and 93b are biased by springs 69 such that teeth 94a or normally engaged with teeth 95a. When the trigger 91 is pulled, the teeth 94a and 95a come out of engagement with one another so that the chair assembly 12 can be rotated to or from the deployed position. FIG. 9 shows the teeth 94a and 95a disengaged from one another so that the chair assembly 12 can be rotated. In a preferred embodiment, the handle 46 also includes a button 96 that is pressed to allow trigger 91 to be actuated. Therefore, when the handle 46 and trigger 91 are pulled when moving the chair assembly 12 from the stowed to the first intermediate position, without pressing button 96, the trigger will not be actuated and the chair assembly 12 cannot be accidentally rotated during this part of the movement.

In a preferred embodiment, the lock pin 56 is automatically pulled out of the lock pin opening 54 when the chair assembly 12 is rotated from the second intermediate position to the first intermediate position. This allows the chair assembly 12 to be pushed to the stowed position after reaching the first intermediate position. As shown in FIG. 11, in a preferred embodiment, the upper stop member 58 is contacted by the elbow plate 76 when the chair assembly 12 is moved from the stowed position to the first intermediate position.

With reference to FIGS. 3A-6B, the method of deploying the chair assembly 12 will now be described. In a preferred embodiment, the compartment 108 includes a door 110 (FIG. 1) thereon. Door 110 is pivoted open and the pivotable stowage latch 64 is pivoted so that it is not in contact with plate 66. The cabin attendant then grasps the handle 46 and pulls outwardly and upwardly and is provided assistance by gas spring 62 (in another embodiment the gas spring can be omitted). As a result of the pivot points provided by circular plate 48 and elbow plate 76, the chair assembly 12 moves from the stowed position to the first intermediate position while maintaining a vertical configuration. During this movement, pads 52 ride against wear plates 50, gas spring 62 provides assistance and belt 84 moves as the first and second gears 80 and 82 rotate. The chair assembly 12 stops moving when elbow plate 76 is stopped by upper stop member 58. At this point in the motion the lock pin 56 is biased by spring 57 into lock pin opening 54. The cabin attendant then presses button 96 and actuates trigger 91, which disengages teeth 94a from teeth 95a and rotates the chair assembly 12 from the first intermediate position to the second intermediate position where the rear of the back portion 14 is in contact with the first wall 24. Once the chair assembly 12 is in the second intermediate position, the trigger 91 is released and teeth 94a once again engage teeth 95a, thereby preventing rotation of the chair assembly 12. Next, the headrest 40 is pivoted to the deployed or open position and the seat portion 16 is pivoted downwardly to place the chair assembly 12 in the deployed position. To stow the chair assembly 12 these steps are reversed. In a preferred embodiment, pulling the trigger 91 automatically releases the headrest 40 and gravity allows the headrest 40 to pivot to the stowed position.

Generally, any track assembly or deployment assembly that moves the chair assembly from the stowed position to a first intermediate position, to a second intermediate position and to a deployed position is within the scope of the present invention. In an embodiment, when the chair assembly is rotated to the second intermediate position, the seat portion and/or headrest can deploy automatically, thereby moving the chair assembly from the first intermediate position to the second intermediate position and the deployed position simultaneously.

As will be appreciated by those of ordinary skill in the art, one of the advantages of the present invention is the ability to stow the chair assembly 12 at a lower position and in a more compact state compared to the higher deployed position. Another advantage is to stow the chair assembly within the compartment interior under the sink and counter and deploy it outside of the compartment interior. Therefore, when the aft complex 100 is positioned in the rear of an aircraft, the chair assembly deploys forwardly.

With reference to FIGS. 1, 2 and 7, it will be appreciated that the top wall 30 is positioned at a height H1 with respect to a floor of the aircraft in which the aft complex 100 is positioned. As shown in FIG. 7, in the stowed position, the entire chair assembly 12 is positioned below the first height H1 (and the sink 20 and counter 19) and within compartment 108. As shown in FIG. 2, in the deployed position, at least a portion of the chair assembly 12 (e.g., the headrest 40 and the handle 46) is positioned above the first height H1 (and the sink 20 and counter 19). In a preferred embodiment, as shown in FIG. 7, aft wall 28 includes first and second vertical wall portions 28a and 28b that are offset from one another in the forward direction. In the stowed position, the chair assembly 12 is positioned adjacent the first vertical wall portion 28a and in the first intermediate position the chair assembly 12 is positioned adjacent the second vertical wall portion 28b. The offset positions of the first and second vertical wall portions 28a and 28b provides for a sink cut out 29, where the sink 20 can be positioned such that the chair assembly 12 can be stowed at least partially underneath the sink 20 and then deploy forwardly of and at least partially above the sink 20 and associated counter 19. Furthermore, the chair assembly 12 maintains a generally vertical orientation during movement from the stowed position to the first intermediate position (as shown in FIG. 7), from the first intermediate position to the second intermediate position and from the second intermediate position to the deployed position. As used herein, a generally vertical orientation means that the top of the back portion faces upwardly and the bottom of the back portion faces downwardly. It does not mean that the back portion has to remain completely vertical. For example, as shown in FIG. 2, the back portion includes a slight rearward tilt to provide comfort for a person sitting in the seat. In this position, the top of the back portion faces upwardly and the bottom of the back portion faces downwardly, and, therefore, the chair assembly is in a generally vertical orientation or configuration.

As shown, the first wall 24 is generally vertically oriented. Therefore, when the chair assembly 12 is in the stowed position, the seat pivot axis A1 extends generally parallel to the first wall 24. When the chair assembly 12 is moved to the first intermediate position, the chair assembly 12 moves upwardly along an arcuate path P1. This arcuate path P1 can best be seen in FIG. 7, where the movement of the center point C1 of the seat pivot axis A1 is shown. In the first intermediate position, the seat pivot axis A1 continues to extend generally parallel to the first wall 24 (see FIG. 7). In the stowed position the center point C1 is located at a first position and in the first intermediate position the center point C1 is located at a second position. The second position is located forward of the first position (see arrow F1 in FIG. 7). Furthermore, in the first position the center point C1 defines a second height H2 and in the second position the center point defines a third height H3. The second height H2 is lower than the third height H3. Furthermore, the drawings show the stowable seat assembly 10 attached to the right side of wall 24. In another embodiment, the stowable seat assembly 10 can be attached to the left side of wall 24.

When the chair assembly 12 is rotated from the first intermediate position to the second intermediate position, the seat pivot axis A1 pivots about 90 degrees such that it is generally perpendicular to the first wall 24. Furthermore, the center point C1 of the seat pivot axis A1 remains at the same height as in the first intermediate position. Therefore, in both the first intermediate position, second intermediate position and deployed position, the third height H3 is greater than the second height H2.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description of the Preferred Embodiments using the singular or plural number may also include the plural or singular number respectively. The word "or" in reference to a list of two or more items, covers all of the following interpretations of the word: any of the items in the list, all of the items in the list, and any combination of the items in the list.

The above-detailed description of embodiments of the disclosure is not intended to be exhaustive or to limit the teachings to the precise form disclosed above. While specific embodiments of and examples for the disclosure are described above for illustrative purposes, various equivalent modifications are possible within the scope of the disclosure, as those skilled in the relevant art will recognize. For example, while processes or blocks are presented in a given order, alternative embodiments may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed in parallel, or may be performed, at different times. Further any specific numbers noted herein are only examples: alternative implementations may employ differing values or ranges.

The above-detailed description of embodiments of the disclosure is not intended to be exhaustive or to limit the teachings to the precise form disclosed above. While specific embodiments of and examples for the disclosure are described above for illustrative purposes, various equivalent modifications are possible within the scope of the disclosure, as those skilled in the relevant art will recognize. Further, any specific numbers noted herein are only examples: alternative implementations may employ differing values, measurements or ranges. It will be appreciated that any dimensions given herein are only examplary and that none of the dimensions or descriptions are limiting on the present invention.

The teachings of the disclosure provided herein can be applied to other systems, not necessarily the system described above. The elements and acts of the various embodiments described above can be combined to provide further embodiments.

These and other changes can be made to the disclosure in light of the above Detailed Description of the Preferred Embodiments. While the above description describes certain embodiments of the disclosure, and describes the best mode contemplated, no matter how detailed the above appears in text, the teachings can be practiced in many ways. Details of the system may vary considerably in its implementation details, while still being encompassed by the subject matter disclosed herein. As noted above, particular terminology used when describing certain features or aspects of the disclosure should not be taken to imply that the terminology is being redefined herein to be restricted to any specific characteristics, features or aspects of the disclosure with which that terminology is associated. In general, the terms used in the following claims should not be construed to limit the disclosures to the specific embodiments disclosed in the specification unless the above Detailed Description of the Preferred Embodiments section explicitly defines such terms. Accordingly, the actual scope of the disclosure encompasses not only the disclosed embodiments, but also all equivalent ways of practicing or implementing the disclosure under the claims.

Accordingly, although exemplary embodiments of the invention have been shown and described, it is to be understood that all the terms used herein are descriptive rather than limiting, and that many changes, modifications, and substitutions may be made by one having ordinary skill in the art without departing from the scope of the invention as defined by the appended claims.

## Claims

1. A monument (100) configured to be positioned in an aircraft, the monument (100) comprising: an enclosure that defines an enclosure interior,
a compartment (108) positioned in the enclosure interior, wherein the compartment (108) includes at least a first generally vertically oriented wall (24) and defines a compartment interior, and
a stowable seat assembly (10) disposed in the compartment interior, wherein the stowable seat assembly (10) includes a chair assembly (12) that includes a back portion (14) and a seat portion (16), wherein the back portion (14) has a top and a bottom, wherein the seat portion (16) is pivotably connected to the back portion (14) along a seat pivot axis (A1) such that the seat is pivotable between a closed position and an open position, wherein the chair assembly (12) is movable between a stowed position where the seat pivot axis (A1) extends generally parallel to the first wall (24) and the chair assembly (12) is positioned in the compartment interior, and a deployed position where the seat pivot axis (A1) extends generally perpendicular to the first wall (24) and the chair assembly (12) is positioned outside of the compartment interior; and
wherein the monument (100) comprises a first facility (104a) and a second facility (106) and the compartment (108) is positioned between the first facility (104a) and the second facility (106), wherein at least one of the facilities (104a, 106) includes a sink (20), and wherein at least a portion of the chair assembly (12) is positioned below at least a portion of the sink (20) when the chair assembly (12) is in the stowed position.

2. The monument (100) of claim 1, wherein the compartment (108) includes a top wall (30) that is positioned at a first height (H1), wherein in the stowed position the entire chair assembly (12) is positioned below the first height (H1), and wherein in the deployed position at least a portion of the chair assembly (12) is positioned above the first height (H1).

3. The monument (100) of claim 2, wherein the sink (20) includes a counter (19), and wherein the sink (20) and counter (19) are mounted on the top wall (30).

4. The monument (100) of claim 2, wherein in the stowed position the chair assembly (12) has a generally vertical orientation, and wherein the deployed position the chair assembly (12) has a generally vertical orientation.

5. The monument (100) of claim 1 wherein the seat pivot axis (A1) defines a center point (C1), wherein in the stowed position the center point (C1) is located at a first position and in the deployed position the center point (C1) is located at a second position, and wherein the second position is located forward of the first position.

6. The monument (100) of claim 5, wherein the first position defines a second height (H2) and the second position defines a third height (H3), and wherein the second height (H2) is lower than the third height (H3).

7. The monument (100) of claim 1 wherein the stowable seat assembly (10) includes a track assembly (22) that is secured to the first wall (24), wherein the chair assembly (12) is movable along the track assembly (22) between the stowed position and the deployed position.

8. The monument (100) of claim 7, wherein the track assembly (22) includes at least one arcuate shaped member wear plate (50).

9. A method of deploying a chair assembly (12), the method comprising the steps of:
(a) providing a stowable seat assembly (10) that includes the chair assembly (12) and a deployment assembly (18) that is connected to a first wall (24) of an aircraft compartment (108), wherein the chair assembly (12) includes a back portion (14) and a seat portion (16) that is pivotably connected to the back portion (14) along a seat pivot axis (A1),
(b) moving the chair assembly (12) along an arcuate path (P1) from a stowed position where the seat pivot axis (A1) extends generally parallel to the first wall (24) to a first intermediate position where the seat pivot axis (A1) extends generally parallel to the first wall (24),
(c) rotating the chair assembly (12) about a back portion pivot axis from the first intermediate position to a second intermediate position where the seat pivot axis (A1) extends generally perpendicular to the first wall (24), and
(d) pivoting the seat portion (16) to an open position, thereby placing the chair assembly (12) in a deployed position;
wherein the compartment (108) includes a top wall (30) that is positioned at a first height (H1), wherein in the stowed position the entire chair assembly (12) is positioned below the first height (H1), and wherein in the deployed position at least a portion of the chair assembly (12) is positioned above the first height (H1); and
wherein the top wall (24) includes a sink (20) thereon.

10. The method of claim 9 further comprising the step of grasping a handle (46) that is located on the chair assembly (12) prior to step (b).

11. The method of claim 10, wherein the handle (46) includes a trigger (91), and wherein the method includes pulling a trigger (91) to release a locking mechanism (93a, 93b) prior to step (c).

12. The method of claim 9 wherein the chair assembly (12) includes a headrest (40) pivotably connected to the back portion (14) and step (d) includes pivoting the headrest (40) from a closed position to an open position.

## Patentansprüche

1. Monument (100), das konfiguriert ist, um in einem Flugzeug positioniert zu werden, wobei das Monument (100) umfasst: eine Umfassung, die einen Umfassungsinnenraum definiert,
ein im Umfassungsinnenraum positioniertes Fach (108), wobei das Fach (108) mindestens eine erste im Allgemeinen vertikal ausgerichtete Wand (24) beinhaltet und einen Fachinnenraum definiert, und
eine im Fachinnenraum angeordnete verstaubare Sitzanordnung (10), wobei die verstaubare Sitzanordnung (10) eine Stuhlanordnung (12) beinhaltet, die einen Rücklehnenteil (14) und einen Sitzteil (16) beinhaltet, wobei der Rücklehnenteil (14) eine Ober- und eine Unterseite aufweist, wobei der Sitzteil (16) schwenkbar mit dem Rücklehnenteil (14) entlang einer Sitzschwenkachse (A1) verbunden ist, so dass der Sitz schwenkbar zwischen einer geschlossenen Position und einer offenen Position ist, wobei die Stuhlanordnung (12) bewegbar zwischen einer verstauten Position, in der sich die Sitzschwenkachse (A1) im Allgemeinen parallel zur ersten Wand (24) erstreckt und die Stuhlanordnung (12) im Fachinnenraum positioniert ist, und einer ausgeklappten Position ist, in der sich die Sitzschwenkachse (A1) im Allgemeinen senkrecht zur ersten Wand (24) erstreckt und die Stuhlanordnung (12) außerhalb des Fachinnenraums positioniert ist, und
wobei das Monument (100) eine erste Einrichtung (104a) und eine zweite Einrichtung (106) umfasst und das Fach (108) zwischen der ersten Einrichtung (104a) und der zweiten Einrichtung (106) positioniert ist, wobei mindestens eine der Einrichtungen (104a, 106) ein Waschbecken (20) beinhaltet, und wobei mindestens ein Teil der Stuhlanordnung (12) unter mindestens einem Teil des Waschbeckens (20) positioniert ist, wenn die Stuhlanordnung (12) in der verstauten Position ist.

2. Monument (100) nach Anspruch 1, wobei das Fach (108) eine obere Wand (30) beinhaltet, die an einer ersten Höhe (H1) positioniert ist, wobei die gesamte Stuhlanordnung (12) in der verstauten Position unter der ersten Höhe (H1) positioniert ist, und wobei mindestens ein Teil der Stuhlanordnung (12) in der ausgeklappten Position über der ersten Höhe (H1) positioniert ist.

3. Monument (100) nach Anspruch 2, wobei das Waschbecken (20) eine Waschtischplatte (19) beinhaltet, und wobei das Waschbecken (20) und die Waschtischplatte (19) auf der oberen Wand (30) montiert sind.

4. Monument (100) nach Anspruch 2, wobei die Stuhlanordnung (12) in der verstauten Position eine im Allgemeinen vertikale Ausrichtung aufweist, und wobei die Stuhlanordnung (12) in der ausgeklappten Position im Allgemeinen eine vertikale Ausrichtung aufweist.

5. Monument (100) nach Anspruch 1, wobei die Sitzschwenkachse (A1) einen Mittelpunkt (C1) definiert, wobei sich der Mittelpunkt (C1) in der verstauten Position an einer ersten Position befindet, und wobei sich der Mittelpunkt (C1) in der ausgeklappten Position an einer zweiten Position befindet, und wobei sich die zweite Position vor der ersten Position befindet.

6. Monument (100) nach Anspruch 5, wobei die erste Position eine zweite Höhe (H2) definiert und die zweite Position eine dritte Höhe (H3) definiert, und wobei die zweite Höhe (H2) niedriger als die dritte Höhe (H3) ist.

7. Monument (100) nach Anspruch 1, wobei die verstaubare Sitzanordnung (10) eine Schienenanordnung (22) beinhaltet, die an der ersten Wand (24) befestigt ist, wobei die Stuhlanordnung (12) entlang der Schienenanordnung (22) zwischen der verstauten Position und der ausgeklappten Position bewegbar ist.

8. Monument (100) nach Anspruch 7, wobei die Schienenanordnung (22) mindestens eine bogenförmige Gleitplatte (50) beinhaltet.

9. Verfahren zum Ausklappen einer Stuhlanordnung (12), wobei das Verfahren die Schritte umfasst:
(a) Bereitstellen einer verstaubaren Sitzanordnung (10), die die Stuhlanordnung (12) und eine Ausklappanordnung (18) beinhaltet, die mit einer ersten Wand (24) eines Flugzeugfachs (108) verbunden ist, wobei die Stuhlanordnung (12) einen Rücklehnenteil (14) und einen Sitzteil (16) beinhaltet, der schwenkbar mit dem Rücklehnenteil (14) entlang einer Sitzschwenkachse (A1) verbunden ist,
(b) Bewegen der Stuhlanordnung (12) entlang eines bogenförmigen Wegs (P1) aus einer verstauten Position, in der sich die Sitzschwenkachse (A1) im Allgemeinen parallel zur ersten Wand (24) erstreckt, in eine erste Zwischenposition, in der sich die Sitzschwenkachse (A1) im Allgemeinen parallel zur ersten Wand (24) erstreckt,
(c) Drehen der Stuhlanordnung (12) um eine Schwenkachse des Rücklehnenteils aus der ersten Zwischenposition in eine zweite Zwischenposition, in der sich die Sitzschwenkachse (A1) im Allgemeinen senkrecht zur ersten Wand (24) erstreckt, und
(d) Schwenken des Sitzteils (16) in eine offene Position, wodurch die Stuhlanordnung (12) in einer ausgeklappten Position platziert wird;
wobei das Fach (108) eine obere Wand (30) beinhaltet, die an einer ersten Höhe (H1) positioniert ist, wobei die gesamte Stuhlanordnung (12) in der verstauten Position unter der ersten Höhe (H1) positioniert ist, und wobei mindestens ein Teil der Stuhlanordnung (12) in der ausgeklappten Position über der ersten Höhe (H1) positioniert ist; und
wobei die obere Wand (24) ein Waschbecken (20) darauf beinhaltet.

10. Verfahren nach Anspruch 9, ferner umfassend den Schritt des Greifens eines auf der Stuhlanordnung (12) befindlichen Griffs (46) vor Schritt (b).

11. Verfahren nach Anspruch 10, wobei der Griff (46) einen Auslöser (91) beinhaltet, und wobei das Verfahren vor Schritt (c) das Ziehen eines Auslösers (91) beinhaltet, um einen Verriegelungsmechanismus (93a, 93b) zu lösen.

12. Verfahren nach Anspruch 9, wobei die Stuhlanordnung (12) eine Kopfstütze (40) beinhaltet, die schwenkbar mit dem Rücklehnenteil (14) verbunden ist, und wobei Schritt (d) das Schwenken der Kopfstütze (40) aus einer geschlossenen Position in eine offene Position beinhaltet.

## Revendications

1. Édifice (100) configuré pour être positionné dans un aéronef, l'édifice (100) comprenant : une enceinte qui définit un intérieur d'enceinte,
un compartiment (108) positionné dans l'intérieur d'enceinte, dans lequel le compartiment (108) comprend au moins une première paroi (24) orientée de manière essentiellement verticale et définit un intérieur de compartiment, et
un ensemble strapontin (10) agencé dans l'intérieur de compartiment, dans lequel l'ensemble strapontin (10) comprend un ensemble chaise (12) qui comprend une partie dossier (14) et une partie siège (16), dans lequel la partie dossier (14) présente un haut et un bas, dans lequel la partie siège (16) est raccordée pivotante à la partie dossier (14) le long d'un axe de pivotement de siège (A1), de sorte que le siège peut pivoter entre une position fermée et une position ouverte, dans lequel l'ensemble chaise (12) peut être déplacé entre une position d'entreposage dans laquelle l'axe de pivotement de siège (A1) s'étend de manière essentiellement parallèle à la première paroi (24) et l'ensemble chaise (12) est positionné dans l'intérieur de compartiment, et une position de déploiement dans laquelle l'axe de pivotement de siège (A1) s'étend de manière essentiellement perpendiculaire à la première paroi (24) et l'ensemble chaise (12) est positionné à l'extérieur de l'intérieur de compartiment ; et
dans lequel l'édifice (100) comprend un premier équipement (104a) et un deuxième équipement (106) et le compartiment (108) est positionné entre le premier équipement (104a) et le deuxième équipement (106), dans lequel au moins un des équipements (104a, 106) comprend un lavabo (20), et dans lequel au moins une partie de l'ensemble chaise (12) est positionnée en dessous d'au moins une partie du lavabo (20), lorsque l'ensemble chaise (12) se trouve dans la position d'entreposage.

2. Édifice (100) selon la revendication 1, dans lequel le compartiment (108) comprend une paroi supérieure (30) qui est positionnée à une première hauteur (H1), dans lequel, dans la position d'entreposage, la totalité de l'ensemble chaise (12) est positionnée en dessous de la première hauteur (H1), et dans lequel, dans la position de déploiement, au moins une partie de l'ensemble chaise (12) est positionnée au-dessus de la première hauteur (H1).

3. Édifice (100) selon la revendication 2, dans lequel le lavabo (20) comprend un plan de travail (19), et dans lequel le lavabo (20) et le plan de travail (19) sont montés sur la paroi supérieure (30).

4. Édifice (100) selon la revendication 2, dans lequel, dans la position d'entreposage, l'ensemble chaise (12) présente une orientation essentiellement verticale, et dans lequel, dans la position de déploiement, l'ensemble chaise (12) présente une orientation essentiellement verticale.

5. Édifice (100) selon la revendication 1, dans lequel l'axe de pivotement de siège (A1) définit un point central (C1), dans lequel, dans la position d'entreposage, le point central (C1) est situé au niveau d'une première position et, dans la position déployée, le point central (C1) est situé au niveau d'une deuxième position, et dans lequel la deuxième position est située à l'avant de la première position.

6. Édifice (100) selon la revendication 5, dans lequel la première position définit une deuxième hauteur (H2) et la deuxième position définit une troisième hauteur (H3), et dans lequel la deuxième hauteur (H2) est inférieure à la troisième hauteur (H3).

7. Édifice (100) selon la revendication 1, dans lequel l'ensemble strapontin (10) comprend un ensemble rail (22) qui est fixé sur la première paroi (24), dans lequel l'ensemble chaise (12) peut être déplacé le long de l'ensemble rail (22) entre la position d'entreposage et la position de déploiement.

8. Édifice (100) selon la revendication 7, dans lequel l'ensemble rail (22) comprend au moins une plaque d'usure (50) de forme arquée.

9. Procédé de déploiement d'un ensemble chaise (12), le procédé comprenant les étapes consistant à :
(a) fournir un ensemble strapontin (10) qui comprend l'ensemble chaise (12) et un ensemble de déploiement (18) qui est raccordé à une première paroi (24) d'un compartiment d'aéronef (108),
dans lequel l'ensemble chaise (12) comprend une partie dossier (14) et une partie siège (16) qui est raccordée pivotante à la partie dossier (14) le long d'un axe de pivotement de siège (A1),
(b) déplacer l'ensemble chaise (12) le long d'un trajet en arc (P1) à partir d'une position d'entreposage dans laquelle l'axe de pivotement de siège (A1) s'étend de manière essentiellement parallèle à la première paroi (24) vers une première position intermédiaire dans laquelle l'axe de pivotement de siège (A1) s'étend de manière essentiellement parallèle à la première paroi (24),
(c) faire tourner l'ensemble chaise (12) autour d'un axe de pivotement de partie dossier de la première position intermédiaire vers une deuxième position intermédiaire dans laquelle l'axe de pivotement de siège (A1) s'étend de manière essentiellement perpendiculaire à la première paroi (24), et
(d) faire pivoter la partie siège (16) vers une position ouverte, ce qui place l'ensemble chaise (12) dans une position de déploiement ;
dans lequel le compartiment (108) comprend une paroi supérieure (30) qui est positionnée à une première hauteur (H1), dans lequel, dans la position d'entreposage, la totalité de l'ensemble chaise (12) est positionnée en dessous de la première hauteur (H1), et dans lequel, dans la position de déploiement, au moins une partie de l'ensemble chaise (12) est positionnée au-dessus de la première hauteur (H1) ; et
dans lequel un lavabo (20) est présent sur la paroi supérieure (24).

10. Procédé selon la revendication 9, comprenant en outre une étape consistant à saisir une poignée (46) qui est située sur l'ensemble chaise (12) préalablement à l'étape (b).

11. Procédé selon la revendication 10, dans lequel la poignée (46) comprend un déclencheur (91), et dans lequel le procédé comprend une étape consistant à actionner un déclencheur (91) afin de libérer un mécanisme de verrouillage (93a, 93b) préalablement à l'étape (c).

12. Procédé selon la revendication 9, dans lequel l'ensemble chaise (12) comprend un appui-tête (40) raccordé pivotant à la partie dossier (14) et l'étape (d) comprend une étape consistant à faire pivoter l'appui-tête (40) à partir d'une position fermée vers une position ouverte.
